# EUROPÄISCHE PATENTSCHRIFT

(11) **EP 3 192 910 B1**
(45) Veröffentlichungstag und Bekanntmachung des Hinweises auf die Patenterteilung: **24.07.2019**
(21) Anmeldenummer: 16151573.9
(22) Anmeldetag: 15.01.2016
(51) Int. Cl.: B32B 5/02, B32B 5/08, B32B 5/26, D04H 1/4374, D04H 3/007, D04H 3/018, D04H 3/147, D04H 3/16, B32B 5/14, B32B 7/02, B32B 7/04, B32B 27/12, B32B 27/32, B32B 37/06, B32B 37/14, B32B 37/30, B32B 38/00, B32B 3/26, D04H 5/06, D01D 5/088, B32B 7/05

(54) **VERFAHREN ZUR HERSTELLUNG EINES LAMINATES UND LAMINAT**
METHOD FOR MANUFACTURING A LAMINATE AND LAMINATE
PROCEDE DE FABRICATION D'UN LAMINE ET LAMINE

(43) Veröffentlichungstag der Anmeldung: 19.07.2017
(73) Patentinhaber: Reifenhäuser GmbH & Co. KG Maschinenfabrik, 53844 Troisdorf (DE)
(72) Erfinder: Sommer, Sebastian, 53844 Troisdorf (DE); Maas, Michael, 52503 Rösrath (DE); Cinquemani, Claudio, 50733 Köln (DE); Jansen, Markus, 40477 Düsseldorf (DE); Quick, Nicolas, 59955 Winterberg (DE)
(74) Vertreter: Rohmann, Michael

(56) Entgegenhaltungen:
- EP-A1- 1 277 868
- EP-A1- 1 508 634
- EP-A2- 1 277 866
- WO-A1-03/055675
- WO-A2-02/31250
- DE-A1- 10 105 784
- US-A1- 2004 116 024

## Beschreibung

Die Erfindung betrifft ein Verfahren zur Herstellung eines Laminates mit zumindest zwei übereinander angeordneten Vliesstoff-Lagen aus Endlosfilamenten, insbesondere aus Endlosfilamenten aus thermoplastischem Kunststoff, wobei das Aggregat der zumindest zwei aufeinander angeordneten Vliesstoff-Lagen mit der Maßgabe verfestigt wird, dass über die Fläche des Aggregates Verfestigungsbereiche und verfestigungsfreie Bereiche verteilt angeordnet sind. Die Erfindung betrifft fernerhin ein Laminat mit zumindest zwei übereinander angeordneten Vliesstoff-Lagen aus Endlosfilamenten. - Im Rahmen der Erfindung werden Vliesstoff-Lagen aus Endlosfilamenten eingesetzt. Bekanntlich unterscheiden sich Endlosfilamente aufgrund ihrer quasi endlosen Länge von Stapelfasern, die viel geringere Längen von beispielsweise 10 mm bis 60 mm aufweisen.

In der Praxis ist es häufig wünschenswert Vliesprodukte bzw. Vliesstoff-Lagen mit voluminöser Charakteristik zu erzeugen. Diese Vliesprodukte sollen eine relativ große Dicke bzw. ein verhältnismäßig hohes Volumen aufweisen. Eine Möglichkeit hierzu besteht darin, den Vliesstoffen bzw. Vliesstoff-Lagen eine "3D-Struktur" mit ausgeprägter Strukturausrichtung quer bzw. senkrecht zur Fläche des Vliesstoffes (in z-Richtung) aufzuerlegen.

Eine solche "3D-Struktur" wird bei den aus dem Stand der Technik bekannten Maßnahmen insbesondere durch Prägen eines Vliesstoffes bzw. eines Vliesstoff-Aggregates erreicht. Dazu kann beispielsweise ein gekräuselte Fasern aufweisender Vliesstoff eingesetzt werden. Das Prägen des Vliesstoffes führt zum einen zur Realisierung der 3D-Struktur. Zum anderen wird in den Prägebereichen die Dicke des Vliesstoffes aber auch reduziert und im Übrigen sind dem Prägeverfahren in Bezug auf Geschwindigkeit und erzielbare Produktbreite Grenzen gesetzt. Vor allem bei geringeren Flächengewichten ist die erreichbare Dicke normalerweise nicht zufriedenstellend. Die auf die vorstehend beschriebene Weise behandelten Vliesstoffe sind in der Regel nicht ausreichend druckstabil bzw. zeigen nach einer Druckbelastung ein unzureichendes Wiederaufstellvermögen in den belasteten Bereichen.

Aus WO 03/055675 A1 ist ein Laminat aus zwei Lagen bekannt, wobei eine kräuselbare Lage mit einer schrumpffähigen Lage verbunden wird. Bei der kräuselbaren Lage handelt es sich bevorzugt um einen Vliesstoff aus Kurzfasern bzw. Stapelfasern. Die schrumpffähige Lage kann als Gestrick oder als Vliesstoff oder als gewebte Bahn ausgebildet sein. Bei diesen bekannten Laminaten kann ein vernünftiger Kompromiss zwischen einer hohen Voluminösität einerseits und einer ausreichenden mechanischen Stabilität andererseits nur schwierig erzielt werden.

Weiterhin ist aus EP 1 277 866 A2 ein Laminat (Faserflächengebilde) bekannt, das eine erhöhte Flüssigkeitsaufnahme aufweisen soll. Dieses Laminat umfasst mindestens eine Vliesstoffschicht und ein damit verbundenes geschrumpftes Flächengebilde. Bei dem geschrumpften Flächengebilde kann es sich um ein Gewebe, ein Gewirke, ein Netz, ein Gelege oder um einen Vliesstoff handeln. Es werden ausschließlich Vliese aus Stapelfasern beschrieben. Das hier offenbarte Laminat lässt im Hinblick auf einen guten Kompromiss zwischen einer hohen Voluminösität, einer hohen Druckstabilität und einem guten Wiederaufstellvermögen zu wünschen übrig. - Schließlich wird in US 2004/116024 A1 die Herstellung eines Laminates beschrieben, wobei die Vliesstoff-Lagen dieses Laminates aus Kurzfasern bzw. Stapelfasern bestehen sollen.

Der Erfindung liegt das technische Problem zugrunde, ein Verfahren der eingangs genannten Art anzugeben, bei dem die vorstehend geschilderten Nachteile vermieden werden können und mit dem auf einfache und wenig aufwendige Weise ein Laminat erzeugt werden kann, das ein hohes Volumen bzw. eine große Dicke und zugleich eine hohe Druckstabilität sowie ein gutes Wiederaufstellvermögen aufweist. Der Erfindung liegt fernerhin das technische Problem zugrunde, ein entsprechendes Laminat anzugeben.

Zur Lösung des technischen Problems lehrt die Erfindung ein Verfahren zur Herstellung eines Laminates mit zumindest zwei übereinander angeordneten Vliesstoff-Lagen aus Endlosfilamenten, insbesondere aus Endlosfilamenten aus thermoplastischem Kunststoff,
wobei eine erste Vliesstoff-Lage erzeugt wird, die eine höhere Schrumpffähigkeit bzw. ein höheres Schrumpfpotential in Richtung ihrer Flächenausdehnung aufweist als eine zweite Vliesstoff-Lage, wobei die erste Vliesstoff-Lage mittels eines Spunbond-Verfahrens und/oder mittels eines Meltblown-Verfahrens aus Mehrkomponentenfilamenten, insbesondere aus Bikomponentenfilamenten erzeugt wird,
wobei die zweite Vliesstoff-Lage mittels eines Spunbond-Verfahrens oder mittels eines Meltblown-Verfahrens aus Mehrkomponentenfilamenten - insbesondere aus Bikomponentenfilamenten - und/oder aus Monokomponentenfilamenten erzeugt wird und mit der ersten Vliesstoff-Lage bevorzugt unmittelbar flächig kombiniert bzw. zusammengeführt wird, insbesondere bevorzugt unmittelbar auf der ersten Vliesstoff-Lage abgelegt wird,
wobei das Aggregat der zumindest zwei bzw. der beiden unmittelbar aufeinander angeordneten Vliesstoff-Lagen mit der Maßgabe verfestigt wird, dass über die Fläche des Aggregates Verfestigungsbereiche und verfestigungsfreie Bereiche verteilt angeordnet sind, wobei im Anschluss an die Verfestigung das Schrumpfen der ersten Vliesstoff-Lage aktiviert wird, so dass als Folge der Schrumpfung der ersten Vliesstoff-Lage verfestigungsfreie Bereiche der zweiten Vliesstoff-Lage quer, insbesondere senkrecht zur Flächenausdehnung des Aggregates verschoben bzw. angehoben werden und wobei ein Laminat mit einer Dicke D unter 2 mm erzeugt wird.

Eine sehr empfohlene Ausführungsform der Erfindung ist dadurch gekennzeichnet, dass die erste Vliesstoff-Lage als Spinnvlies mittels eines Spunbond-Verfahrens erzeugt wird. Diese Ausführungsform der Erfindung hat sich ganz besonders bewährt. Die Mehrkomponentenfilamente bzw. Bikomponentenfilamente für die erste Vliesstoff-Lage werden mittels einer Spinneinrichtung bzw. Spinnerette ersponnen und anschließend bevorzugt zur Kühlung durch eine Kühlvorrichtung geführt. In der Kühlvorrichtung werden die Filamente zweckmäßigerweise mit einem fluiden Medium, insbesondere mit Kühlluft gekühlt. Es liegt im Rahmen der Erfindung, dass die aus der Kühlvorrichtung austretenden Filamente anschließend durch eine Verstreckeinrichtung geführt werden, mit deren Hilfe die Filamente verstreckt werden. Insbesondere durch Einstellung der Verstreckparameter kann erreicht werden, dass die aus den Filamenten gebildete erste Vliesstoff-Lage ein höheres Schrumpfpotential aufweist als die zweite Vliesstoff-Lage. Die verstreckten Filamente werden im Anschluss daran auf einer Ablage - vorzugsweise auf einem Ablagesiebband - zur ersten Vliesstoff-Lage abgelegt. Gemäß einer bevorzugten Ausführungsform ist zwischen der Verstreckeinrichtung und der Ablage zumindest ein Diffusor als Ablageeinrichtung zwischengeschaltet, durch den die Filamente geführt werden. Es liegt im Rahmen der Erfindung, dass der zumindest eine Diffusor gegenüberliegende, in Bezug auf die Strömungsrichtung der Filamente divergierende Seitenwände aufweist. Eine besonders empfohlene Ausführungsform der Erfindung ist dadurch gekennzeichnet, dass das Aggregat aus der Kühlvorrichtung und der Verstreckeinrichtung als geschlossenes System ausgebildet ist. Bei diesem geschlossenen Aggregat erfolgt außer der Zufuhr von Kühlmedium bzw. Kühlluft in der Kühlvorrichtung keine weitere Luftzufuhr von außen. Ein solches geschlossenes System hat sich für die Erzeugung der ersten Vliesstoff-Lage im Rahmen der Erfindung ganz besonders bewährt. - Grundsätzlich kann die erste Vliesstoff-Lage auch mittels eines Meltblown-Verfahrens hergestellt werden.

Eine weitere sehr empfohlene Ausführungsform des erfindungsgemäßen Verfahrens zeichnet sich dadurch aus, dass die zweite Vliesstoff-Lage als Spinnvlies mittels eines Spunbond-Verfahrens erzeugt wird. Für dieses Spunbond-Verfahren bzw. die zugehörige Spunbond-Vorrichtung gilt auch die vorstehend für die erste Vliesstoff-Lage angegebene Beschreibung bzw. deren Merkmale. - Gemäß einer anderen Ausführungsvariante wird die zweite Vliesstoff-Lage mittels eines Meltblown-Verfahrens erzeugt.

Wie oben bereits dargelegt hat sich vor allem zur Herstellung der ersten Vliesstoff-Lage ein Spunbond-Verfahren besonders bewährt. Es hat sich gezeigt, dass das erfindungsgemäße technische Problem mit der erfindungsgemäßen Schrumpfung besonders funktionssicher und effektiv gelöst wird, wenn das beschriebene geschlossene Aggregat eingesetzt wird und wenn zusätzlich nach besonders bevorzugter Ausführungsvariante zumindest ein Diffusor zwischen Verstreckeinrichtung und Ablage verwendet wird. Es wurde bereits angedeutet, dass über die Verstreckparameter des Spunbond-Verfahrens das Schrumpfpotential für die erste Vliesstoff-Lage sehr gezielt eingestellt bzw. gesteuert werden kann.

Es empfiehlt sich, dass das Verhältnis der Flächengewichte der ersten (stärker schrumpfenden) Vliesstoff-Lage zur zweiten (weniger schrumpfenden) Vliesstoff-Lage 25:75 bis 75:25 beträgt. Das gilt bevorzugt auch für das Verhältnis zweier entsprechender Vliesstoff-Lagen in einem 3-lagigen oder mehrlagigen Laminat. - Zweckmäßigerweise beträgt die Masse der ersten Vliesstoff-Lage in dem Aggregat aus den beiden Vliesstoff-Lagen bis zu 70 % der Gesamtmasse des Aggregates. - Eine empfohlene Ausführungsform der Erfindung ist dadurch gekennzeichnet, dass die erste Vliesstoff-Lage als vorverfestigte bzw. verfestigte Vliesstoff-Lage eingesetzt wird. Dabei wird die erste Vliesstoff-Lage bevorzugt thermisch vorverfestigt bzw. verfestigt, beispielsweise mit einem Kalander thermisch vorverfestigt bzw. verfestigt. Die Vorverfestigung bzw. Verfestigung erfolgt dabei zweckmäßigerweise mit einer offenen Kalanderstruktur.

Es liegt im Rahmen der Erfindung, dass die unterschiedlichen Schrumpffähigkeiten bzw. die unterschiedlichen Schrumpfpotentiale der beiden Vliesstoff-Lagen durch unterschiedliche Rohstoffe für die Endlosfilamente der beiden Vliesstoff-Lagen und/oder durch unterschiedliche Prozessbedingungen bei der Erzeugung bzw. beim Spinnen der Endlosfilamente für die beiden Vliesstoff-Lagen und/oder durch unterschiedliche Filamentquerschnitte der Endlosfilamente der beiden Vliesstoff-Lagen und/oder durch unterschiedliche Orientierungen der Endlosfilamente in den beiden Vliesstoff-Lagen eingestellt werden.

Eine besonders empfohlene Ausführungsform des erfindungsgemäßen Verfahrens ist dadurch gekennzeichnet, dass die Schrumpffähigkeit bzw. das Schrumpfpotential der ersten Vliesstoff-Lage in Maschinenrichtung (MD) größer ist als die Schrumpffähigkeit bzw. das Schrumpfpotential dieser ersten Vliesstoff-Lage quer zur Maschinenrichtung (CD). Maschinenrichtung meint dabei insbesondere die Produktionsrichtung bzw. die Förderrichtung der ersten Vliesstoff-Lage bei der Erzeugung bzw. beim Erspinnen der ersten Vliesstoff-Lage. Bei der Herstellung der ersten Vliesstoff-Lage werden die Filamente für diese Vliesstoff-Lage zweckmäßigerweise auf einer bewegten Ablage und bevorzugt auf einem bewegten Ablageband bzw. Ablagesiebband abgelegt. Maschinenrichtung meint dann insbesondere die Förderrichtung dieser Ablage bzw. dieses Ablagesiebbandes. Quer zur Maschinenrichtung (CD) meint insbesondere die Richtung quer zu dieser Förderrichtung.

Besonders bevorzugt ist eine Ausführungsform des erfindungsgemäßen Verfahrens, bei der eine erste Vliesstoff-Lage eingesetzt wird, bei der das Verhältnis der Schrumpffähigkeit (Schrumpfpotential) in Maschinenrichtung (MD) zur Schrumpffähigkeit (Schrumpfpotential) quer zur Maschinenrichtung (CD) 1:1 bis 3:1, vorzugsweise 1,1:1 bis 1,6:1 und besonders bevorzugt 1,1:1 bis 1,5:1 beträgt. Wenn hier und nachfolgend von Schrumpffähigkeit bzw. Schrumpfpotential die Rede ist, meint dies insbesondere die Schrumpffähigkeit bzw. das Schrumpfpotential bei der Aktivierungstemperatur, auf die bei der thermischen Aktivierung erhitzt bzw. erwärmt wird. Schrumpffähigkeit bzw. Schrumpfpotential meint fernerhin den freien Schrumpf bzw. den freien Schrumpf der ersten Vliesstoff-Lage ohne irgendwelche Behinderungen / mechanischen Behinderungen der Schrumpfung. Gemäß besonders empfohlener Ausführungsform der Erfindung ist das Schrumpfpotential in MD-Richtung der ersten Vliesstoff-Lage 10 bis 60%, bevorzugt 15 bis 50% größer als das Schrumpfpotential in CD-Richtung.

Das Schrumpfpotential wird empfohlenermaßen nach der folgenden Messmethode gemessen: Eine quadratische Vliesprobe mit 100 mm Kantenlänge (Quadrat: 100 mm x 100 mm) wird in einem heißen Fluid 1 Minute lang bei der Aktivierungstemperatur erhitzt. Als Fluid sind beispielsweise Luft, Wasser, Silikonöl oder dergleichen fluides Medium geeignet. Nach Entnahme und Abkühlung der Vliesprobe werden die geschrumpften Längen gemessen und zwar in Maschinenrichtung (MD) und quer zur Maschinenrichtung (CD). Die Schrumpfung wird in % gegen die 100 mm angegeben. Wenn also eine Vliesprobe nach der Schrumpfung in einer gemessenen Richtung 60 mm lang ist, so weist die Vliesprobe in dieser Richtung eine Schrumpfung von 40 % auf. Auf diese Weise kann das Verhältnis der Schrumpfpotentiale MD / CD in den beiden Richtungen ermittelt und angegeben werden.

Empfohlenermaßen weist die erste Vliesstoff-Lage bei der Aktivierungstemperatur in Maschinenrichtung (MD) ein Schrumpfpotential von 20 bis 80 % auf. Gemäß einer Ausführungsform der Erfindung wird das Schrumpfpotential in Maschinenrichtung (MD) und/oder quer - insbesondere senkrecht - zur Maschinenrichtung (CD) lediglich im Bereich von 10 bis 80 %, bevorzugt im Bereich von 10 bis 50 % des jeweiligen gesamten Schrumpfpotentials ausgenutzt. Wenn somit beispielsweise die erste Vliesstoff-Lage in Maschinenrichtung ein Schrumpfpotential von 50 % aufweist und 50 % dieses Schrumpfpotentials ausgenutzt werden, so hat diese Vliesstoff-Lage in Maschinenrichtung eine Endlänge von 75 % der ursprünglichen Länge, also eine um 25 % geringere Länge. - Die Verschiebung bzw. Anhebung der verfestigungsfreien Bereiche der zweiten Vliesstoff-Lage quer, insbesondere senkrecht zur Flächenausdehnung des Aggregates (in z-Richtung) wird zufriedenstellend nur bei ausreichendem Schrumpfpotentialunterschied zwischen der ersten (stärker schrumpfenden) Vliesstoff-Lage und der zweiten (weniger schrumpfenden) Vliesstoff-Lage erreicht. In diesem Zusammenhang hat sich bewährt, dass die zweite Vliesstoff-Lage bei der Aktivierungstemperatur ein Schrumpfpotential von maximal 50 %, vorzugsweise maximal 30 % und bevorzugt maximal 20 % des Schrumpfpotentials der ersten Vliesstoff-Lage besitzt. Wenn also die erste Vliesstoff-Lage ein Schrumpfpotential von beispielsweise 50 % aufweist, so besitzt die zweite

(weniger schrumpfende) Vliesstoff-Lage vorzugsweise ein Schrumpfpotential von unter 10 %. Es empfiehlt sich, dass die zweite (weniger schrumpfende) Vliesstoff-Lage bei der Aktivierungstemperatur ein Schrumpfpotential von 0 bis 50 %, vorzugsweise von 0 bis 20 % und sehr bevorzugt von 0 bis 10 % aufweist.

Eine besonders empfohlene Ausführungsform des erfindungsgemäßen Verfahrens zeichnet sich dadurch aus, dass die erste Vliesstoff-Lage aus Mehrkomponentenfilamenten, insbesondere aus Bikomponentenfilamenten, mit Kern-Mantel-Konfiguration erzeugt wird. Zweckmäßigerweise ist die Differenz zwischen der Schmelztemperatur der Kernkomponente und der Schmelztemperatur der Mantelkomponente größer als 5°C, nach einer bevorzugten Ausführungsform größer als 10°C. Es liegt im Rahmen der Erfindung, dass die Kernkomponente aus einem Kunststoff aus der Gruppe "Polyester, Polyolefin, Polylactid" besteht bzw. im Wesentlichen besteht. Als Polyester wird dabei vorzugsweise Polyethylenterephthalat (PET) eingesetzt und als Polyolefin wird empfohlenermaßen Polypropylen (PP) verwendet. Weiterhin liegt es im Rahmen der Erfindung, dass die Mantelkomponente der Mehrkomponentenfilamente bzw. Bikomponentenfilamente der ersten Vliesstoff-Lage aus einem Kunststoff aus der Gruppe "Polyolefin, Polyester-Copolymer, Polylactid-Copolymer (CoPLA)" besteht bzw. im Wesentlichen besteht. Als Polyolefin wird dabei zweckmäßigerweise Polyethylen (PE) eingesetzt und als Polyester-Copolymer wird vorzugsweise Polyethylenterephthalat-Copolymer (CoPET) verwendet. Bevorzugte Kern-Mantel-Kombinationen für die Mehrkomponentenfilamente bzw. Bikomponentenfilamente der ersten Vliesstoff-Lage sind PET/PE, PET/PP, PET/CoPET, PLA/CoPLA und PLA/PP. - Das Massenverhältnis der Kernkomponente zur Mantelkomponente beträgt nach einer Ausführungsform 50:50 bis 90:10. Es liegt im Rahmen des erfindungsgemäßen Verfahrens, dass diese Massenverhältnisse der Kern-Mantel-Konfiguration während der Produktion ohne Stillstand der Maschine frei variiert werden können.

Es liegt im Rahmen der Erfindung, dass die zweite Vliesstoff-Lage aus Mehrkomponentenfilamenten, insbesondere aus Bikomponentenfilamenten, mit Kern-Mantel-Konfiguration und/oder mit Seite-Seite-Konfiguration erzeugt wird. Wenn die Mehrkomponentenfilamente bzw. Bikomponentenfilamente der zweiten Vliesstoff-Lage nach besonders bevorzugter Ausführungsform eine Kern-Mantel-Konfiguration aufweisen, besteht der Kern empfohlenermaßen aus einem Kunststoff aus der Gruppe "Polyester, Polylactid (PLA), Polyolefin". Als Polyester wird dabei bevorzugt Polyethylenterephthalat (PET) eingesetzt. Als Polyolefin für die Kernkomponente empfiehlt sich insbesondere Polypropylen (PP). Als Mantelkomponente für die Mehrkomponentenfilamente bzw. Bikomponentenfilamente der zweiten Vliesstoff-Lage wird vorzugsweise ein Kunststoff aus der Gruppe "Polyester-Copolymer, Polylactid-Copolymer (CoPLA), Polyolefin" verwendet. Als Polyolefin empfiehlt sich dabei insbesondere Polyethylen. Als Polyester-Copolymer wird zweckmäßigerweise Polyethylenterephthalat-Copolymer (CoPET) eingesetzt. Wenn für die zweite Vliesstoff-Lage Bikomponentenfilamente mit Kern-Mantel-Konfiguration verwendet werden, bestehen nach einer Ausführungsform sowohl die Kernkomponente als auch die Mantelkomponente aus einem Polyolefin, insbesondere aus Polypropylen und/oder Polyethylen. Die Kernkomponente wird bevorzugt von einem Polypropylen gebildet und die Mantelkomponente zweckmäßigerweise entweder von Polyethylen oder von einem Polypropylen, das unterschiedlich zu dem Polypropylen der Kernkomponente ist. - Die für die zweite Vliesstoff-Lage verwendeten Mehrkomponentenfilamente bzw. Bikomponentenfilamente können gemäß einer Ausführungsform auch eine Seite-Seite-Konfiguration aufweisen. Bei dieser Ausführungsform bestehen bewährtermaßen beide Seitenkomponenten aus einem Polyolefin, insbesondere aus Polypropylen und/oder Polyethylen. Grundsätzlich können für die Filamente der zweiten Vliesstoff-Lage auch Monokomponentenfilamente eingesetzt werden. Diese Monokomponentenfilamente bestehen dann empfohlenermaßen aus einem Polyolefin, vorzugsweise aus Polyethylen oder Polypropylen.

Nachfolgend werden drei ganz besonders bevorzugte Ausführungsformen für Bikomponentenfilamente der ersten Vliesstoff-Lage und der zweiten Vliesstoff-Lage angegeben:

| **Erste Vliesstoff-Lage** | | **Zweite Vliesstoff-Lage** | |
|---|---|---|---|
| Kern/Mantel | PET/PE | Kern/Mantel | PET/PE |
| Kern/Mantel | PET/CoPET | Kern/Mantel | PET/CoPET |
| Kern/Mantel | PLA/CoPLA | Kern/Mantel | PLA/CoPLA |

Bei diesen Ausführungsformen entsprechen die Materialkombinationen der Bikomponentenfilamente der stärker schrumpfenden ersten Vliesstoff-Lage den Materialkombinationen der zweiten weniger schrumpfenden Vliesstoff-Lage. Die höhere Schrumpffähigkeit der ersten Vliesstoff-Lage wird dabei vorzugsweise durch die Spinnbedingungen bzw. Verstreckbedingungen bei der Herstellung der Filamente und/oder durch die Anteile der Kern- bzw. Mantelkomponenten und/oder durch Unterschiede zwischen den einzelnen Kunststoffen eingestellt. - Zweckmäßigerweise wird vor allem bei gleichen Materialkombinationen für die erste und die zweite Vliesstoff-Lage das unterschiedliche Schrumpfpotential der Lagen durch die Spinnbedingungen bzw. Verstreckbedingungen bei der Erzeugung der Filamente eingestellt und zwar empfohlenermaßen durch die Filamentgeschwindigkeit. Insbesondere eine geringere Filamentgeschwindigkeit (in m/min) bei der Erzeugung der Filamente ist kennzeichnend für die erste (stärker schrumpfende) Vliesstoff-Lage und eine höhere Filamentgeschwindigkeit (in m/min) ist bei der Herstellung der Filamente charakteristisch für die zweite (weniger schrumpfende) Vliesstoff-Lage. Die Filamentgeschwindigkeit bei der Erzeugung der Filamente der ersten Vliesstoff-Lage beträgt beispielsweise 1000 bis 3000 m/min und die Filamentgeschwindigkeit bei der Herstellung der Filamente der zweiten Vliesstoff-Lage beträgt empfohlenermaßen mehr bzw. deutlich mehr als 3000 m/min. Grundsätzlich kann aber auch auf andere Art und Weise das unterschiedliche Schrumpfpotential der beiden Vliesstoff-Lagen eingestellt werden. - Weitere Ausführungsformen bezüglich der für die erste Vliesstoff-Lage und für die zweite Vliesstoff-Lage eingesetzten Kunststoffkomponenten ergeben sich aus der nachfolgenden Tabelle:

| **Erste Vliesstoff-Lage** | | **Zweite Vliesstoff-Lage** | |
|---|---|---|---|
| Kern/Mantel | PET/PE | Kern/Mantel | PP/PE |
| Kern/Mantel | PLA/PP | Kern/Mantel | PP/PP |
| Kern/Mantel | PET/PE | Seite/Seite | PP/PE |
| Kern/Mantel | PLA/PP | Seite/Seite | PP/PP |
| Kern/Mantel | PET/PE | Mono | PE |
| Kern/Mantel | PLA/PP | Mono | PP |

In dieser Tabelle sind neben Vliesstoff-Lagen aus Bikomponentenfilamenten (Kern/Mantel bzw. Seite/Seite) auch Vliesstoff-Lagen aus mit "Mono" gekennzeichneten Monokomponentenfilamenten aufgeführt. - Die stärkere Schrumpffähigkeit der ersten Vliesstoff-Lage wird hier vorzugsweise durch die Spinnbedingungen bzw. Verstreckbedingungen bei der Erzeugung der Bikomponentenfilamente und/oder durch die Anteile der Kern- bzw. Mantelkomponenten und/oder durch den Querschnitt der Bikomponentenfilamente der Vliesstoff-Lagen eingestellt. - Es ist hervorzuheben, dass bei allen vorstehend aufgeführten Ausführungsformen die Außenoberfläche der Filamente der ersten Vliesstoff-Lage aus einem Kunststoff bzw. aus einer Kunststoffart (beispielsweise Polyethylen) besteht, der die auch auf der Außenoberfläche der Filamente der jeweils zugeordneten zweiten Vliesstoff-Lage vorhanden ist. Dabei sind die Kunststoffe aber nicht unbedingt identisch und zwei Polyethylene können sich voneinander unterscheiden, beispielsweise im Schmelzpunkt oder dergleichen. - Die Ausgestaltung des gleichen Kunststofftyps auf der Außenoberfläche der Filamente ist im Rahmen der Erfindung ganz besonders bevorzugt. Das wird weiter unten noch näher ausgeführt.

Erfindungsgemäß wird das Aggregat aus den beiden Vliesstoff-Lagen verfestigt und zwar mit der Maßgabe verfestigt, dass über die Fläche des Aggregats Verfestigungsbereiche und verfestigungsfreie Bereiche verteilt angeordnet sind. Nach empfohlener Ausführungsform der Erfindung wird die Verfestigung des Aggregates aus den beiden Vliesstoff-Lagen als thermische Verfestigung durchgeführt. Es liegt im Rahmen der Erfindung, dass bei dieser thermischen Verfestigung Endlosfilamente der ersten Vliesstoff-Lage mit Endlosfilamenten der zweiten Vliesstoff-Lage verschmolzen werden. Die Verschmelzungspunkte der Endlosfilamente bilden dann die Verfestigungsbereiche des Laminates. Zweckmäßigerweise wird die Verfestigung des Aggregates aus den zumindest zwei Vliesstoff-Lagen bzw. aus den beiden Vliesstoff-Lagen mittels zumindest eines Kalanders durchgeführt. Es liegt fernerhin im Rahmen der Erfindung, dass eine (erste) Kalanderwalze des Kalanders Prägeflächen und prägeflächenfreie Bereiche aufweist. Die zweite Walze (Gegenwalze) des Kalanders ist dann zweckmäßigerweise glatt bzw. im Wesentlichen glatt ausgebildet. Der Abstand benachbarter Prägeflächen der ersten Kalanderwalze beträgt vorzugsweise mindestens 0,5 mm, bevorzugt mindestens 1 mm und zweckmäßigerweise maximal 10 mm, empfohlenermaßen maximal 5 mm. Die Prägeflächen können durch runde Punkte, Ellipsen, Rauten und dergleichen sowie auch von durchgehenden oder unterbrochenen Linien gebildet werden. Dabei können die Prägeflächen gerade oder geschwungen sein, regelmäßig oder unregelmäßig angeordnet sein und/oder hauptsächlich in Maschinenrichtung (MD) und/oder quer zur Maschinenrichtung (CD) angeordnet sein. - Die thermische Verfestigung kann auch mit Hilfe eines heißen Fluids, insbesondere mit Hilfe von Heißluft erfolgen. Grundsätzlich ist auch eine chemische Verfestigung und/oder eine mechanische Verfestigung, insbesondere durch Vernadeln, beispielweise durch Wasserstrahlvernadelung, möglich. Dabei ist sicherzustellen, dass die Verfestigung - wie beschrieben - nicht vollflächig realisiert wird.

Es liegt im Rahmen der Erfindung, dass die Schrumpfung der ersten Vliesstoff-Lage thermisch aktiviert wird. Die thermische Aktivierung erfolgt vorzugsweise mit Hilfe zumindest eines heißen Fluids und/oder durch Kontakt mit einer heißen Oberfläche. Bevorzugt hat bei der letztgenannten Ausführungsvariante die erste stärker schrumpfende Vliesstoff-Lage Kontakt zu der heißen Oberfläche. Die heiße Oberfläche kann insbesondere Bestandteil einer Walze sein. Es empfiehlt sich, dass die thermische Aktivierung mit der Maßgabe durchgeführt wird, dass die Schrumpfung der ersten Vliesstoff-Lage gleichmäßig über die Fläche der Lage erfolgt. Gemäß bewährter Ausführungsform wird der heißen Oberfläche - insbesondere der Walze mit der heißen Oberfläche - eine kältere Oberfläche - insbesondere eine zweite Walze mit kälterer Oberfläche - nachgeschaltet. Beim bevorzugten Einsatz der vorstehend genannten Walzen weist empfohlenermaßen die zweite Walze mit der kälteren Oberfläche im Vergleich zu der ersten Walze eine geringere Umfangsgeschwindigkeit auf. Auf diese Weise kann das Ausmaß des Schrumpfes relativ einfach kontrolliert werden. - Die thermische Aktivierung kann nach einer Ausführungsform in einem Heißluftfeld erfolgen, wie beispielsweise in einem Spannrahmenofen. Für die thermische Aktivierung kann das Aggregat aus den beiden Vliesstoff-Lagen durch einen Ofen geführt werden. Die thermische Aktivierung kann auch mittels UV-Licht, Mikrowellen- und/oder Laserbestrahlung erfolgen. - Hervorzuheben ist, dass die thermische Aktivierung im Rahmen des erfindungsgemäßen Verfahrens sowohl "inline" unmittelbar nach Realisierung der vorgeschalteten Verfahrensschritte durchgeführt werden kann oder aber "offline" und somit abgekoppelt von den vorgeschalteten Verfahrensschritten erfolgen kann. Die thermische Aktivierung kann also grundsätzlich "offline" zu einer anderen Zeit und an einem anderen Ort erfolgen. Dann kann das noch nicht thermisch aktivierte und somit noch nicht sehr voluminöse Laminat auf einfache und platzsparende Weise zu diesem Bearbeitungsort transportiert werden.

Es empfiehlt sich, dass die Aktivierungstemperatur der thermischen Aktivierung zwischen 80°C und 170°C, vorzugsweise zwischen 80°C und 160°C liegt. Nach einer Ausführungsform beträgt die Aktivierungstemperatur 90°C bis 140°C, insbesondere 110°C bis 130°C. Wenn nach einer bevorzugten Ausführungsform die erste Vliesstoff-Lage Bikomponentenfilamente mit einer Kernkomponente aus Polyethylenterephthalat (PET) und einer Mantelkomponente aus einem Polyolefin - insbesondere aus Polyethylen oder Polypropylen - aufweist, beträgt die Aktivierungstemperatur zweckmäßigerweise 90°C bis 140°C und insbesondere 100°C bis 140°C. Bei einer Ausführungsform der ersten Vliesstoff-Lage mit Bikomponentenfilamenten, deren Kernkomponente aus Polyethylenterephthalat (PET) besteht und deren Mantelkomponente aus Polyethylenterephthalat-Copolymer (CoPET) besteht, beträgt die Aktivierungstemperatur bevorzugt 100°C bis 160°C. Wenn die erste Vliesstoff-Lage Bikomponentenfilamente mit einer Kernkomponente aus Polylactid (PLA) aufweist und einer Mantelkomponente aus einem Polyolefin - insbesondere aus einem Polyethylen oder einem Polypropylen - aufweist, beträgt die Aktivierungstemperatur zweckmäßigerweise 80°C bis 130°C.

Es liegt im Rahmen der Erfindung, dass nach der Aktivierung bzw. der thermischen Aktivierung der Schrumpfung eine (weitere) Verfestigung des Aggregates aus den zumindest zwei Vliesstoff-Lagen bzw. aus den beiden Vliesstoff-Lagen erfolgt. Dabei kann diese Verfestigung vorzugsweise als thermische Verfestigung durchgeführt werden, beispielsweise mittels Heißluft oder mit Hilfe von Mikrowellen- oder IR-Bestrahlung. Nach einer besonders empfohlenen Ausführungsform erfolgt die (weitere) Verfestigung bzw. die (weitere) thermische Verfestigung mit Hilfe zumindest eines Kalanders. Es liegt im Rahmen der Erfindung, dass bei dieser (weiteren) thermischen Verfestigung der Schmelzpunkt bzw. Erweichungspunkt des Kunststoffes bzw. der Kunststoffe an der Oberfläche der Filamente zumindest einer Vliesstoff-Lage, bevorzugt beider Vliesstoff-Lagen überschritten wird. Durch diese weitere Verfestigung bzw. thermische Verfestigung nach der Aktivierung der Schrumpfung wird gleichsam der bei der Aktivierung bzw. thermischen Aktivierung erzeugte 3D-Zustand des Aggregates stabilisiert.

Zur Lösung des technischen Problems lehrt die Erfindung weiterhin ein Laminat mit zumindest zwei übereinander angeordneten bzw. unmittelbar übereinander angeordneten Vliesstoff-Lagen aus Endlosfilamenten, insbesondere aus thermoplastischem Kunststoff, wobei eine erste Vliesstoff-Lage als Spinnvlies-Lage oder als Meltblown-Lage ausgebildet ist und Mehrkomponentenfilamente, insbesondere Bikomponentenfilamente aufweist, wobei eine unmittelbar auf der ersten Vliesstoff-Lage angeordnete zweite Vliesstoff-Lage als Spinnvlies-Lage oder als Meltblown-Lage ausgebildet ist und Mehrkomponentenfilamente - insbesondere Bikomponentenfilamente - und/oder Monokomponentenfilamente aufweist, wobei die erste Vliesstoff-Lage aufgrund thermischer Schrumpfung in Richtung ihrer Flächenausdehnung geschrumpft ausgebildet ist und als Folge dieser Schrumpfung Bereiche der zweiten Vliesstoff-Lage quer zur Flächenausdehnung des Aggregates aus erster und zweiter Vliesstoff-Lage verschoben bzw. angehoben ausgebildet sind und wobei die Dicke D des Laminates unter 2 mm liegt. Dadurch erhält das Aggregat eine relativ ausgeprägte Faserorientierung in z-Richtung bzw. quer, insbesondere senkrecht zur Oberfläche des Aggregates aus den beiden Vliesstoff-Lagen. Es liegt im Rahmen der Erfindung, dass das Laminat aus den beiden Vliesstoff-Lagen an der Außenseite der ersten stärker schrumpfenden Vliesstoff-Lage eben bzw. glatt ausgebildet ist. Außenseite meint hier die Seite der ersten Vliesstoff-Lage die nicht mit der zweiten Vliesstoff-Lage verbunden ist. Die genannte Außenseite der ersten Vliesstoff-Lage ist bevorzugt ebener bzw. glatter und insbesondere deutlich ebener bzw. glatter als die Außenseite der zweiten Vliesstoff-Lage ausgebildet.

Es liegt im Rahmen der Erfindung, dass das Aggregat der zumindest zwei übereinander angeordneten bzw. unmittelbar übereinander angeordneten Vliesstoff-Lagen mit der Maßgabe verfestigt ist, das über die Fläche des Aggregates Verfestigungsbereiche und verfestigungsfreie Bereiche verteilt angeordnet sind. Fernerhin liegt es im Rahmen der Erfindung, dass als Folge der Schrumpfung der ersten Vliesstoff-Lage verfestigungsfreie Bereiche der zweiten Vliesstoff-Lage quer, insbesondere senkrecht zur Flächenausdehnung des Aggregates verschoben bzw. angehoben ausgebildet sind.

Eine ganz besonders bevorzugte Ausführungsform, der im Rahmen der Erfindung besondere Bedeutung zukommt, ist dadurch gekennzeichnet, dass zumindest eine Kunststoffkomponente bzw. dass die Kunststoffkomponente an der Außenoberfläche der Endlosfilamente der ersten Vliesstoff-Lage einer Kunststoffkomponente bzw. der Kunststoffkomponente an der Außenoberfläche der Endlosfilamente der zweiten Vliesstoff-Lage entspricht. Dadurch ergeben sich insbesondere im Hinblick auf die Verfestigung bzw. thermische Verfestigung des Aggregates Vorteile. Gemäß einer empfohlenen Ausführungsform handelt es sich bei einer bzw. der Kunststoffkomponente an der Außenoberfläche der Endlosfilamente der ersten Vliesstoff-Lage und bei einer bzw. der Kunststoffkomponente an der Außenoberfläche der Endlosfilamente der zweiten Vliesstoff-Lage um ein Polyolefin, insbesondere um Polyethylen oder Polypropylen. Gemäß einer anderen Ausführungsform der Erfindung ist eine bzw. die Kunststoffkomponente an der Außenoberfläche der Endlosfilamente der ersten Vliesstoff-Lage und eine bzw. die Kunststoffkomponente an der Außenoberfläche der Endlosfilamente der zweiten Vliesstoff-Lage ein Copolymer eines Polyesters, insbesondere ein Copolymer von Polyethylenterephthalat (CoPET) oder ein Copolymer eines Polylactids (CoPLA).

Gemäß besonders empfohlener Ausführungsform der Erfindung ist der Schmelzpunkt einer bzw. der Kunststoffkomponente an der Außenoberfläche der Endlosfilamente der ersten Vliesstoff-Lage höher als die Temperatur (Aktivierungstemperatur), bei der die Schrumpfung der ersten Vliesstoff-Lage aktivierbar ist bzw. thermisch aktivierbar ist. Zweckmäßigerweise sind die Endlosfilamente der ersten Vliesstoff-Lage als Mehrkomponentenfilamente bzw. Bikomponentenfilamente mit Kern-Mantel-Konfiguration ausgeführt und bevorzugt ist die Schmelztemperatur der Mantelkomponente dieser Endlosfilamente der ersten Vliesstoff-Lage höher als die Temperatur (Aktivierungstemperatur), bei der die Schrumpfung der ersten Vliesstoff-Lage aktivierbar ist bzw. thermisch aktivierbar ist. Eine sehr empfohlene Ausführungsform der Erfindung ist dadurch gekennzeichnet, dass die Temperatur (Aktivierungstemperatur), bei der die Schrumpfung der ersten Vliesstoff-Lage aktivierbar ist bzw. aktiviert wird mindestens 5°C, bevorzugt mindestens 10°C und besonders bevorzugt mindestens 15°C unter der Schmelztemperatur der am niedrigsten schmelzenden Kunststoffkomponente des der Schrumpfaktivierung ausgesetzten Vliesstoff-Lagen-Aggregates liegt. Die Aktivierungstemperatur liegt nach einer empfohlenen Ausführungsvariante bis zu 30°C, bevorzugt bis zu 25°C unter der Schmelztemperatur der am niedrigsten schmelzenden Kunststoffkomponente des Vliesstoff-Lagen-Aggregates. Grundsätzlich kann die Aktivierungstemperatur auch bis zu 25°C über der Schmelztemperatur der am niedrigsten schmelzenden Kunststoffkomponente des Vliesstoff-Lagen-Aggregates liegen.

Erfindungsgemäß wird das Aggregat der beiden aufeinander angeordneten Vliesstoff-Lagen verfestigt, so dass über die Fläche des Aggregates Verfestigungsbereiche und verfestigungsfreie Bereiche verteilt angeordnet sind. Es liegt im Rahmen der Erfindung, dass der durchschnittliche minimale Abstand zwischen zwei Verfestigungsbereichen des Aggregates mehr als 1 mm, bevorzugt mehr als 1,5 mm und sehr bevorzugt mehr als 2 mm beträgt.

Erfindungsgemäß liegt die Dicke D des Laminates (fertiges Laminat) unter 2 mm, bevorzugt unter 1,8 mm und besonders bevorzugt unter 1,5 mm liegt. Eine bewährte Ausführungsform zeichnet sich dadurch aus, dass die Dicke D des Laminates (fertiges Laminat) kleiner als 1,3 mm, empfohlenermaßen kleiner als 1 mm ist. Die Aggregate bzw. Laminate mit diesen Dicken werden insbesondere für Hygienezwecke eingesetzt. Für andere Anwendungen kann das Laminat (fertiges Laminat) aber auch Dicken über 1 mm aufweisen. - Die Dicke wird dabei nach der Norm DIN EN 29073-2 (1992), Verfahren A mit einem Andruck von 0,5 kPa gemessen. Fertiges Laminat meint im Übrigen insbesondere das Laminat, bei dem die Schrumpfung bereits erfolgt ist und bei dem auch eine daran anschließende bevorzugte (weitere) Verfestigung des Aggregates aus den Vliesstoff-Lagen bereits durchgeführt wurde. - Bei der Erzeugung eines Laminates mit der vorstehend empfohlenen Dicke wird die Schrumpfung der ersten Vliesstoff-Lage zweckmäßigerweise bei einer Aktivierungstemperatur aktiviert, die bevorzugt mindestens 5°C, besonders bevorzugt mindestens 10°C und ganz besonders bevorzugt mindestens 15°C unter dem Schmelzpunkt des niedrigstschmelzenden im Aggregat eingesetzten Kunststoffes liegt. Die vorstehend spezifizierten Aggregate bzw. Laminate mit den genannten Dicken und mit der empfohlenen Aktivierungstemperatur werden insbesondere für Hygienezwecke eingesetzt.

Eine sehr empfohlene Ausführungsform der Erfindung ist dadurch gekennzeichnet, dass das Verhältnis der Höchstzugkraft des Laminates (fertiges Laminat) in Maschinenrichtung (MD) zur Höchstzugkraft des Laminates quer zur Maschinenrichtung (CD) 2,5:1 bis 1,2:1 beträgt. Laminate mit Höchstzugkraftverhältnissen MD/CD in diesem Bereich haben sich im Rahmen der Erfindung besonders bewährt. Zweckmäßigerweise wird das erfindungsgemäße Verfahren zur Herstellung des Laminates so gesteuert, dass MD/CD-Verhältnisse in diesem Bereich erzielt werden. Die Höchstzugkraft wird gemessen nach DIN EN 29073-3 (1992).

Nach einer Ausführungsform der Erfindung weist das erfindungsgemäße Laminat zumindest drei Vliesstoff-Lagen bzw. drei Vliesstoff-Lagen auf. Eine empfohlene Ausführungsform ist dabei dadurch gekennzeichnet, dass das erfindungsgemäße Laminat ein zumindest dreilagiges Laminat bzw. ein dreilagiges Laminat mit zwei äußeren schrumpfenden bzw. stärker schrumpfenden Lagen und einer mittleren nicht schrumpfenden bzw. weniger schrumpfenden Lage ist. Eine andere bevorzugte Ausführungsform zeichnet sich dadurch aus, dass das Laminat ein zumindest dreilagiges Laminat bzw. ein dreilagiges Laminat mit zwei äußeren nicht schrumpfenden bzw. weniger schrumpfenden Lagen und einer mittleren schrumpfenden bzw. stärker schrumpfenden Lage ist. - Gemäß einer bevorzugten Ausführungsvariante bestehen die drei Lagen des Laminates jeweils aus Mehrkomponentenfilamenten bzw. Bikomponentenfilamenten. Empfohlenermaßen weisen die Mehrkomponentenfilamente bzw. Bikomponentenfilamente der drei Lagen an der Außenoberfläche jeweils den gleichen Kunststoff auf. Zweckmäßigerweise handelt es sich bei dem Kunststoff an der Außenoberfläche der Filamente der drei Lagen um ein Polyolefin, vorzugsweise um das gleiche Polyolefin. Dabei wird als Polyolefin bevorzugt Polyethylen oder Polypropylen eingesetzt. Zweckmäßigerweise sind die Mehrkomponentenfilamente bzw. Bikomponentenfilamente aller drei Lagen mit Kern-Mantel-Konfiguration ausgebildet und dann bestehen empfohlenermaßen die Mantelkomponenten der Mehrkomponentenfilamente bzw. Bikomponentenfilamente aller drei Lagen aus dem gleichen Kunststoff. Bevorzugt bestehen alle Mantelkomponenten aus einem Polyolefin - vorzugsweise aus dem gleichen Polyolefin, - insbesondere aus Polyethylen oder Polypropylen.

In einem dreilagigen Laminat können beispielsweise auch die folgenden drei Lagen realisiert sein: Erste schrumpfende bzw. stärker schrumpfende Vliesstoff-Lage aus Bikomponentenfilamenten mit Kern-Mantel-Konfiguration PET/PE; zweite nicht schrumpfende bzw. weniger schrumpfende Vliesstoff-Lage mit Bikomponentenfilamenten in Kern-Mantel-Konfiguration PET/PE und dritte nicht schrumpfende bzw. weniger schrumpfende Vliesstoff-Lage aus Bikomponentenfilamenten mit Kern-Mantel-Konfiguration PP/PE. - Der Erfindung liegt die Erkenntnis zugrunde, dass in einem solchen Laminat die Schrumpfkraft, die Steifigkeit und die Temperaturbeständigkeit des Polyethylenterephthalats mit dem weichen Griff der außen angeordneten Polyolefinschichten vorteilhaft vereinigt werden. Es resultiert ein Produkt mit optimaler Druckstabilität.

Der Erfindung liegt die Erkenntnis zugrunde, dass ein erfindungsgemäß erzeugtes Laminat zum einen relativ voluminös ausgebildet werden kann und somit eine verhältnismäßig große Dicke aufweist und zum anderen nichtsdestoweniger eine zufriedenstellende Stabilität bzw. Druckstabilität aufweist. Im Gegensatz zu vielen aus dem Stand der Technik bekannten Vliesprodukten zeigen die erfindungsgemäßen Laminate gleichsam eine stabilere Dicke unter Lasteinwirkung und bei einer solchen Lasteinwirkung ist die plastische Verformung des Laminates verhältnismäßig gering. Laminatbereiche weisen ein ausgezeichnetes Wiederaufstellvermögen nach einer Belastung bzw. nach einer Druckbelastung auf. Diese vorteilhaften Eigenschaften können auch bei relativ geringen Flächengewichten der Laminate erzielt werden. Die erfindungsgemäß erzeugten Laminate sind zudem ausreichend steif und maschinengängig.

Das erfindungsgemäße Verfahren zeichnet sich fernerhin durch den Vorteil aus, dass eine kontinuierliche Produktion des Laminates bei relativ hohen Produktionsgeschwindigkeiten ohne Unterbrechung des Produktionsprozesses auf einfache Weise möglich ist. Die Einstellung der Parameter für die Erzeugung der einzelnen Vliesstoff-Lagen ist sehr variabel bzw. flexibel während des Verfahrens möglich und von daher können variable Endprodukte erzeugt werden, ohne dass das Herstellungsverfahren unterbrochen werden muss. Auch der Aktivierungsschritt für die Schrumpfung kann bezüglich der Parameter problemlos variiert werden. Das erfindungsgemäße Verfahren ist auf einfache Weise "inline" durchführbar und problemlos auch "offline" realisierbar. So kann die Aktivierung der Schrumpfung ohne Probleme von der eigentlichen Laminatherstellung abgekoppelt werden. - Zusammenfassend ist festzustellen, dass ein erfindungsgemäßes Laminat mit einer sehr vorteilhaften 3D-strukturierten Oberfläche mit hohem Volumen und großer Dicke bei zufriedenstellender Druckstabilität des Laminates auf einfache, wenig aufwendige und kostengünstige herstellbar ist. Während des Herstellungsprozesses sind verschiedene Parameter der Vliesstoff-Lagen bzw. des resultierenden Laminates variabel und flexibel einstellbar.

Nachfolgend wird die Erfindung anhand einer lediglich ein Ausführungsbeispiel darstellenden Zeichnung näher erläutert. Es zeigen in schematischer Darstellung:
- Fig. 1: einen Vertikalschnitt durch eine Vorrichtung zur Erzeugung einer Vliesstoff-Lage in Form eines Spinnvlieses für ein erfindungsgemäßes Laminat,
- Fig. 2: einen Schnitt durch ein erfindungsgemäßes Laminat aus einer ersten Vliesstoff-Lage und einer zweiten Vliesstoff-Lage a) vor der Schrumpfaktivierung b) während der Schrumpfaktivierung und c) nach der Schrumpfaktivierung,
- Fig. 3: eine perspektivische Ansicht eines erfindungsgemäßen Laminates a) vor der Schrumpfaktivierung und b) nach der Schrumpfaktivierung und
- Fig. 4: einen Schnitt durch ein erfindungsgemäßes dreilagiges Laminat a) vor der Schrumpfaktivierung und b) nach der Schrumpfaktivierung.

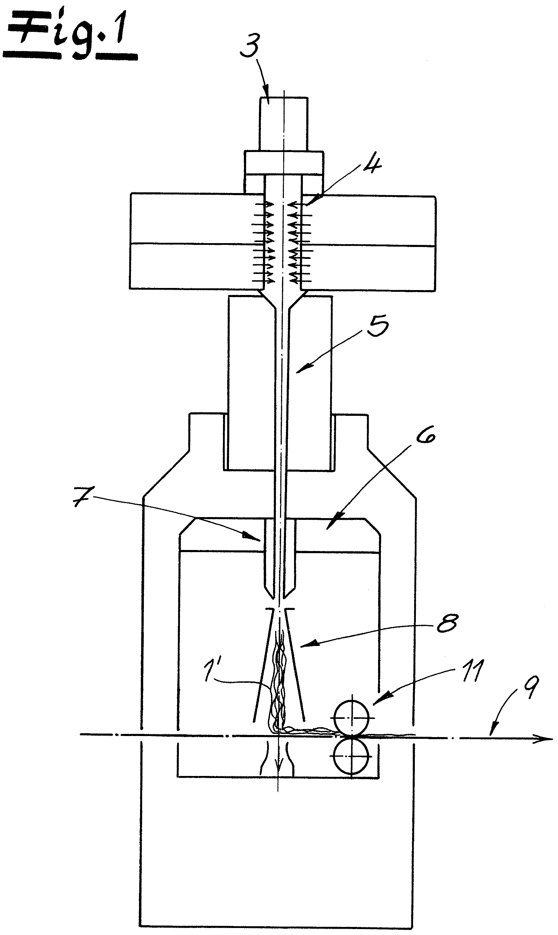

Die Fig. 1 zeigt eine Vorrichtung zur Erzeugung von Vliesstoff-Lagen (1, 2) in Form von Spinnvliesen (spunbonded webs) für das erfindungsgemäße Laminat. Mit dieser Vorrichtung werden Endlosfilamente nach dem Spunbond-Verfahren hergestellt und zum Spinnvlies abgelegt. - Mittels einer Spinneinrichtung 3 werden Filamente 1' bzw. Endlosfilamente ersponnen und anschließend bevorzugt und im Ausführungsbeispiel zur Kühlung durch eine Kühlvorrichtung 4 geführt. Der Kühlvorrichtung 4 ist eine Verstreckeinrichtung 6 mit einem Verstreckschacht 7 nachgeschaltet. An die Kühlvorrichtung 4 schließt vorzugsweise und im Ausführungsbeispiel ein Zwischenkanal 5 an, der die Kühlvorrichtung 4 mit der Verstreckeinrichtung 6 verbindet. Empfohlenermaßen und im Ausführungsbeispiel ist der Verstreckeinrichtung 6 in Strömungsrichtung der Filamente 1' ein Diffusor 8 nachgeschaltet.

Gemäß sehr empfohlener Ausführungsform und im Ausführungsbeispiel ist das Aggregat aus der Kühlvorrichtung 4 und der Verstreckeinrichtung 6 bzw. das Aggregat aus der Kühlvorrichtung 4, dem Zwischenkanal 5 und der Verstreckeinrichtung 6 als geschlossenes System ausgebildet. In diesem geschlossenen Aggregat erfolgt außer der Zufuhr von Kühlluft in der Kühlvorrichtung 4 keine weitere Luftzufuhr von außen.

Im Ausführungsbeispiel gemäß Fig. 1 ist im Anschluss an die Verstreckeinrichtung 6 lediglich ein Diffusor 8 angeordnet. Grundsätzlich könnten hier auch zwei oder mehr Diffusoren hintereinander geschaltet sein. Die aus der Verstreckeinrichtung 6 austretenden Filamente 1' werden durch den Diffusor 8 geführt und anschließend bevorzugt und im Ausführungsbeispiel auf einem Ablagesiebband 9 zur Vliesstoff-Lage 1, 2 abgelegt. Gemäß einer besonders empfohlenen Ausführungsform der Erfindung werden beide Vliesstoff-Lagen 1, 2 des erfindungsgemäßen Laminates 10 als Spinnvliese mit einer in Fig.1 dargestellten Vorrichtung erzeugt. - Grundsätzlich kann eine Vliesstoff-Lage 1, 2 oder können beide Vliesstoff-Lagen 1, 2 aber auch als Meltblown-Vliese nach einem Meltblown-Verfahren hergestellt werden.

Die auf dem in Fig. 1 dargestellten Ablagesiebband 9 abgelegte Vliesstoff-Lage 1, 2 wird dann der Weiterverarbeitung zugeführt. Zweckmäßigerweise wird die (einzelne) Vliesstoff-Lage 1,2 nach ihrer Ablage vorverfestigt und zwar im Ausführungsbeispiel nach Fig. 1 mittels eines Kalanders 11. Bevorzugt wird eine (einzelne) Vliesstoff-Lage 1, 2 unter Verwendung einer offenen Kalanderstruktur kalandriert. Im Anschluss daran wird die Vliesstoff-Lage 1,2 zweckmäßigerweise mit einer weiteren Vliesstoff-Lage 1,2 zu einem erfindungsgemäßen Aggregat bzw. Laminat kombiniert. Diese weitere Vliesstoff-Lage 1,2 kann nach bevorzugter Ausführungsform ebenfalls mit einer Vorrichtung der in Fig. 1 dargestellten Art erzeugt werden und beispielsweise (inline) auf der bereits erzeugten Vliesstoff-Lage 1,2 zum Aggregat aus zwei Vliesstoff-Lagen 1,2 abgelegt werden. Dieses Aggregat wird sodann im Rahmen des erfindungsgemäßen Verfahrens mit der Maßgabe verfestigt, dass über die Fläche des Aggregates Verfestigungsbereiche 12 und verfestigungsfreie Bereiche 13 verteilt angeordnet sind.

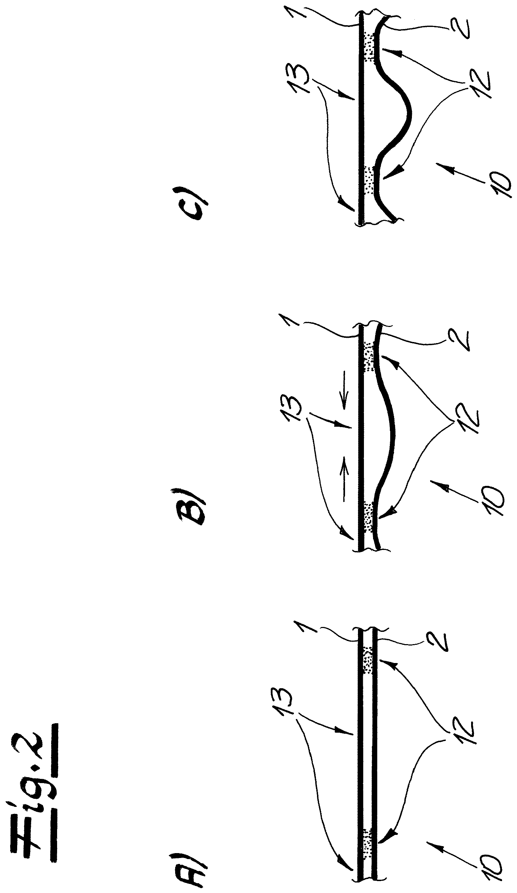

Die Fig. 2 zeigt ein Aggregat aus einer ersten Vliesstoff-Lage 1 und einer zweiten Vliesstoff-Lage 2. Die erste Vliesstoff-Lage 1 weist dabei eine höhere Schrumpffähigkeit bzw. ein höheres Schrumpfpotential auf als die zweite Vliesstoff-Lage 2. In Fig.2 a) ist das Aggregat vor der Schrumpfaktivierung dargestellt. Das Aggregat aus den beiden Vliesstoff-Lagen 1,2 wurde bereits verfestigt, so dass Verfestigungsbereiche 12 bzw. Verfestigungspunkte und verfestigungsfreie Bereiche 13 vorhanden sind. Nach bevorzugter Ausführungsform und im Ausführungsbeispiel wurde die Verfestigung als thermische Verfestigung durchgeführt und in den Verfestigungsbereichen 12 bzw. in den Verfestigungspunkten sind Endlosfilamente der beiden Vliesstoff-Lagen 1,2 miteinander verschmolzen. - Das Aggregat aus den beiden Vliesstoff-Lagen 1,2 wird dann thermisch aktiviert bzw. auf eine Aktivierungstemperatur erhitzt. Dadurch schrumpft die erste Vliesstoff-Lage 1 mit dem höheren Schrumpfpotential. Dies ist durch die Pfeile in der Fig. 2 b) angedeutet worden. Aufgrund dieser Schrumpfung bzw. aufgrund dieses Zusammenziehens der Verfestigungsbereiche 12 werden verfestigungsfreie Bereiche der zweiten Vliesstoff-Lage 2 quer, insbesondere senkrecht zur Flächenausdehnung des Aggregates verschoben bzw. angehoben. Die Figur c) zeigt den abschließenden Zustand des Aggregates nach der thermischen Schrumpfung. Es ist erkennbar, dass aufgrund der Schrumpfaktivierung bzw. aufgrund der Schrumpfung eine ausgeprägte 3D-Struktur des Aggregates bzw. Laminates 10 mit deutlicher z-Komponente quer, insbesondere senkrecht zur Fläche des Laminates 10 vorhanden ist.

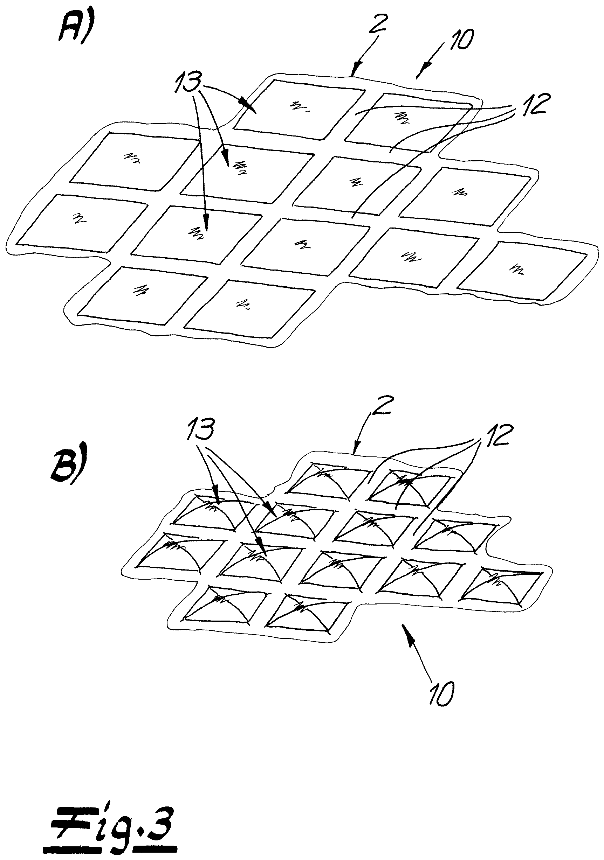

Die Figur 3 a) zeigt eine perspektivische Ansicht eines Aggregates aus zwei Vliesstoff-Lagen 1,2 im bereits verfestigten Zustand mit Verfestigungsbereichen 12 und verfestigungsfreien Bereichen 13. Die Figur 3 b) zeigt dieses Aggregat nach der Schrumpfaktivierung mit den nach oben hin verschobenen verfestigungsfreien Bereichen 13 der zweiten Vliesstoff-Lage 2.

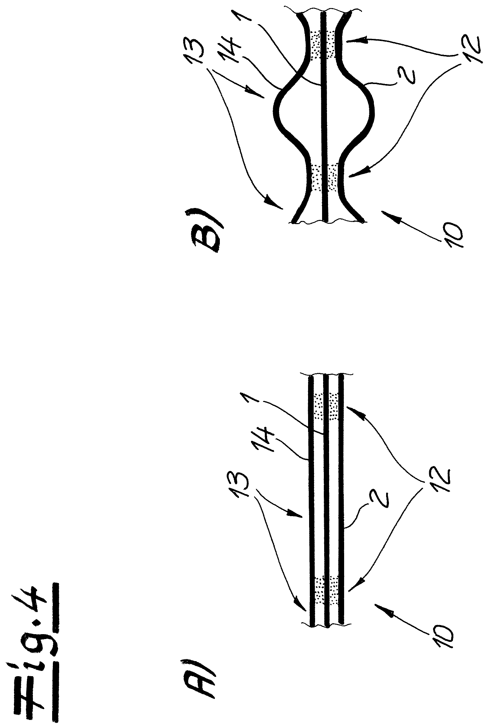

In der Fig. 4 ist ein Schnitt durch ein Aggregat aus drei Vliesstoff-Lagen 1, 2, 14 dargestellt. Die mittlere Vliesstoff-Lage 1 weist dabei eine höhere Schrumpffähigkeit bzw. ein höheres Schrumpfpotential auf als die beiden außen befindlichen Vliesstoff-Lagen 2 und 14. Diese beiden nicht schrumpfenden bzw. weniger schrumpfenden äußeren Vliesstoff-Lagen 2, 14 mögen im Ausführungsbeispiel identisch sein. Grundsätzlich können aber auch verschiedene Vliesstoff-Lagen 2, 14 als äußere Vliesstoff-Lagen verwendet werden. In der Fig. 4a) ist das Aggregat vor der Schrumpfaktivierung gezeigt. Das Aggregat aus den drei Vliesstoff-Lagen 1, 2, 14 wurde bereits verfestigt, so dass Verfestigungsbereiche 12 bzw. Verfestigungspunkte und verfestigungsfreie Bereiche 13 vorhanden sind. Dieses dreilagige Aggregat wird dann thermisch aktiviert bzw. auf eine Aktivierungstemperatur erhitzt. Dadurch schrumpft die mittlere Vliesstoff-Lage 1 mit dem höheren Schrumpfpotential. Das ist wie in der Fig. 2 durch Pfeile angedeutet worden. Aufgrund der Schrumpfung bzw. aufgrund des Zusammenziehens der Verfestigungsbereiche 12 werden verfestigungsfreie Bereiche der beiden äußeren Vliesstoff-Lagen 2, 14 quer, insbesondere senkrecht zur Flächenausdehnung des Aggregates verschoben bzw. angehoben. In Fig. 4b) ist bereits der abschließende Zustand des Aggregates nach der thermischen Schrumpfung dargestellt.

## Patentansprüche

1. Verfahren zur Herstellung eines Laminates (10) mit zumindest zwei übereinander angeordneten Vliesstoff-Lagen (1,2) aus Endlosfilamenten, insbesondere aus Endlosfilamenten aus thermoplastischem Kunststoff,
wobei eine erste Vliesstoff-Lage (1) erzeugt wird, die eine höhere Schrumpffähigkeit bzw. ein höheres Schrumpfpotential in Richtung ihrer Flächenausdehnung aufweist als eine zweite Vliesstoff-Lage (2), wobei die erste Vliesstoff-Lage (1) mittels eines Spunbond-Verfahrens und/oder mittels eines Meltblown-Verfahrens aus Mehrkomponentenfilamenten, insbesondere aus Bikomponentenfilamenten erzeugt wird,
wobei die zweite Vliesstoff-Lage (2) mittels eines Spunbond-Verfahrens oder mittels eines Meltblown-Verfahrens aus Mehrkomponentenfilamenten - insbesondere aus Bikomponentenfilamenten - und/oder aus Monokomponentenfilamenten erzeugt wird und mit der ersten Vliesstoff-Lage (1) unmittelbar flächig kombiniert bzw. zusammengeführt wird, insbesondere unmittelbar auf der ersten Vliesstoff-Lage (1) abgelegt wird,
wobei das Aggregat der zumindest zwei bzw. der beiden aufeinander angeordneten Vliesstoff-Lagen (1,2) mit der Maßgabe verfestigt wird, dass über die Fläche des Aggregates Verfestigungsbereiche (12) und verfestigungsfreie Bereiche (13) verteilt angeordnet sind,
wobei im Anschluss an die Verfestigung das Schrumpfen der ersten Vliesstoff-Lage (1) aktiviert wird, so dass als Folge der Schrumpfung der ersten Vliesstoff-Lage (1) verfestigungsfreie Bereiche (13) der zweiten Vliesstoff-Lage (2) quer, insbesondere senkrecht zur Flächenausdehnung des Aggregates verschoben bzw. angehoben werden
und wobei ein Laminat (10) mit einer Dicke D unter 2 mm erzeugt wird.

2. Verfahren nach Anspruch 1, wobei die unterschiedlichen Schrumpffähigkeiten bzw. die unterschiedlichen Schrumpfpotentiale der beiden Vliesstoff-Lagen (1,2) durch unterschiedliche Rohstoffe für die Endlosfilamente der beiden Vliesstoff-Lagen (1,2) und/oder durch unterschiedliche Prozessbedingungen bei der Erzeugung der Endlosfilamente für die beiden Vliesstoff-Lagen (1,2) und/oder durch unterschiedliche Filamentquerschnitte der Endlosfilamente der beiden Vliesstoff-Lagen (1,2) und/oder durch unterschiedliche Orientierungen der Endlosfilamente in den beiden Vliesstoff-Lagen (1,2) eingestellt werden.

3. Verfahren nach einem der nach Ansprüche 1 oder 2, wobei eine erste Vliesstoff-Lage (1) eingesetzt wird, bei der das Verhältnis der Schrumpffähigkeit (Schrumpfpotential) in Maschinenrichtung (MD) zur Schrumpffähigkeit (Schrumpfpotential) quer zur Maschinenrichtung (CD) 1:1 bis 3:1, vorzugsweise 1,1:1 - 1,6:1 beträgt.

4. Verfahren nach einem der Ansprüche 1 bis 3, wobei die erste Vliesstoff-Lage (1) aus Mehrkomponentenfilamenten - insbesondere aus Bikomponentenfilamenten - mit Kern-Mantel-Konfiguration erzeugt wird.

5. Verfahren nach einem der Ansprüche 1 bis 4, wobei die zweite Vliesstoff-Lage (2) aus Mehrkomponentenfilamenten - insbesondere aus Bikomponentenfilamenten - mit Kern-Mantel-Konfiguration und/oder Seite-Seite-Konfiguration erzeugt wird.

6. Verfahren nach einem der Ansprüche 1 bis 5, wobei die Verfestigung des Aggregates aus den beiden Vliesstoff-Lagen (1,2) als thermische Verfestigung durchgeführt wird und wobei bevorzugt bei dieser thermischen Verfestigung Endlosfilamente der ersten Vliesstoff-Lage (1) mit Endlosfilamenten der zweiten Vliesstoff-Lage (2) verschmolzen werden.

7. Verfahren nach einem der Ansprüche 1 bis 6, wobei die Verfestigung des Aggregates aus den zumindest zwei Vliesstoff-Lagen (1,2) bzw. aus den beiden Vliesstoff-Lagen mit zumindest einem Kalander (11) durchgeführt wird.

8. Verfahren nach einem der Ansprüche 1 bis 7, wobei die Schrumpfung der ersten Vliesstoff-Lage (1) thermisch aktiviert wird, insbesondere mit Hilfe zumindest eines heißen Fluids und/oder durch Kontakt mit einer heißen Oberfläche thermisch aktiviert wird.

9. Verfahren nach einem der Ansprüche 1 bis 8, wobei die Erzeugung der zumindest zwei Vliesstoff-Lagen (1,2), die Verfestigung des Aggregates aus den Vliesstoff-Lagen (1,2) und die Schrumpfung der ersten Vliesstoff-Lage (1) inline durchgeführt werden.

10. Laminat mit zumindest zwei übereinander angeordneten Vliesstoff-Lagen (1,2) aus Endlosfilamenten, insbesondere aus thermoplastischem Kunststoff - vorzugsweise hergestellt nach einem Verfahren gemäß einem der Ansprüche 1 bis 9 - wobei eine erste Vliesstoff-Lage (1) als Spinnvlies-Lage oder als Meltblown-Lage ausgebildet ist und Mehrkomponentenfilamente, insbesondere Bikomponentenfilamente aufweist,
wobei eine unmittelbar auf der ersten Vliesstoff-Lage (1) angeordnete zweite Vliesstoff-Lage (2) als Spinnvlies-Lage oder als Meltblown-Lage ausgebildet ist und Mehrkomponentenfilamente - insbesondere Bikomponentenfilamente - und/oder Monokomponentenfilamente aufweist,
wobei die erste Vliesstoff-Lage (1) aufgrund thermischer Schrumpfung in Richtung ihrer Flächenausdehnung geschrumpft ausgebildet ist und als Folge dieser Schrumpfung Bereiche der zweiten Vliesstoff-Lage (2) quer, insbesondere senkrecht zur Flächenausdehnung des Aggregates aus erster und zweiter Vliesstoff-Lage verschoben bzw. angehoben ausgebildet sind
und wobei die Dicke D des Laminates (10) unter 2 mm liegt.

11. Laminat nach Anspruch 10, wobei das Aggregat der zumindest zwei bzw. der beiden übereinander angeordneten Vliesstoff-Lagen (1,2) mit der Maßgabe verfestigt ist, dass über die Fläche des Aggregates Verfestigungsbereiche (12) und verfestigungsfreie Bereiche (13) verteilt angeordnet sind und wobei als Folge der Schrumpfung der ersten Vliesstofflage (1) verfestigungsfreie Bereiche der zweiten Vliesstoff-Lage (2) in Bezug auf die Verfestigungsbereiche (12) quer, insbesondere senkrecht zur Flächenausdehnung des Aggregates verschoben bzw. angehoben ausgebildet sind.

12. Laminat nach einem der Ansprüche 10 oder 11, wobei zumindest eine Kunststoffkomponente an der Außenoberfläche der Endlosfilamente der ersten Vliesstoff-Lage (1) einer Kunststoffkomponente an der Außenoberfläche der Endlosfilamente der zweiten Vliesstoff-Lage (2) entspricht und wobei vorzugsweise eine Kunststoffkomponente an der Außenoberfläche der Endlosfilamente der ersten Vliesstoff-Lage (1) und eine Kunststoffkomponente an der Außenoberfläche der Endlosfilamente der zweiten Vliesstoff-Lage (2) ein Polyolefin, insbesondere ein Polyethylen oder ein Polypropylen ist.

13. Laminat nach einem der Ansprüche 10 bis 12, wobei der Schmelzpunkt einer Kunststoffkomponente an der Außenoberfläche der Endlosfilamente der ersten Vliesstoff-Lage (1) höher ist als die Temperatur (Aktivierungstemperatur), bei der die Schrumpfung der ersten Vliesstoff-Lage (1) aktivierbar ist und wobei vorzugsweise die Endlosfilamente der ersten Vliesstoff-Lage (1) als Mehrkomponentenfilamente, insbesondere als Bikomponentenfilamente mit Kern-Mantel-Konfiguration ausgeführt sind und wobei die Schmelztemperatur der Mantelkomponente dieser Endlosfilamente höher ist als die Temperatur, bei der die Schrumpfung der ersten Vliesstoff-Lage (1) aktivierbar ist.

14. Laminat nach einem der Ansprüche 10 bis 13, wobei die Temperatur, bei der die Schrumpfung der ersten Vliesstoff-Lage (1) aktivierbar ist bzw. aktiviert wird (Aktivierungstemperatur) mindestens 5°C, bevorzugt mindestens 10°C und besonders bevorzugt mindestens 15°C unter der Schmelztemperatur der am niedrigsten schmelzenden Kunststoffkomponente des Laminates (10) bzw. des der Schrumpfaktivierung ausgesetzten Vliesstoff-Lagen-Aggregates liegt.

15. Laminat nach einem der Ansprüche 10 bis 14, wobei der durchschnittliche minimale Abstand zwischen zwei Verfestigungsbereichen (12) des Aggregates mehr als 1 mm, bevorzugt mehr als 2 mm beträgt.

16. Laminat nach einem der Ansprüche 10 bis 15, wobei die Dicke D des Laminates (10) unter 1,8 mm und besonders bevorzugt unter 1,5 mm liegt.

17. Laminat nach einem der Ansprüche 10 bis 16, wobei das Verhältnis der Höchstzugkraft des Laminates in Maschinenrichtung (MD) zur Höchstzugkraft des Laminates quer zur Maschinenrichtung (CD) 2,5:1 bis 1,2:1 beträgt.

18. Laminat nach einem der Ansprüche 10 bis 17, wobei das Laminat (10) zumindest drei Lagen bzw. Vliesstoff-Lagen aufweist, wobei eine erste Vliesstoff-Lage eine höhere Schrumpffähigkeit bzw. ein höheres Schrumpfpotential in Richtung ihrer Flächenausdehnung aufweist als eine zweite und eine dritte Vliesstoff-Lage und/oder wobei eine erste Vliesstoff-Lage eine niedrigere Schrumpffähigkeit bzw. ein niedrigeres Schrumpfpotential in Richtung ihrer Flächenausdehnung aufweist als eine zweite und eine dritte Vliesstoff-Lage.

19. Laminat nach einem der Ansprüche 10 bis 18, wobei das Laminat (10) zumindest drei Lagen bzw. Vliesstoff-Lagen aufweist, wobei zwei äußere schrumpfende bzw. stärker schrumpfende Lagen bzw. Vliesstoff-Lagen vorgesehen sind sowie eine mittlere nicht schrumpfende bzw. weniger schrumpfende Lage bzw. Vliesstofflage.

20. Laminat nach einem der Ansprüche 10 bis 18, wobei das Laminat (10) zumindest drei Lagen bzw. Vliesstoff-Lagen aufweist, wobei zwei äußere nicht schrumpfende bzw. weniger schrumpfende Lagen bzw. Vliesstoff-Lagen vorgesehen sind sowie eine mittlere schrumpfende bzw. stärker schrumpfende Lage bzw. Vliesstoff-Lage vorgesehen ist.

## Claims

1. A method for producing a laminate (10) comprising at least two nonwoven layers (1, 2) of continuous filaments, in particular of continuous filaments of thermoplastic material arranged one above the other,
wherein a first nonwoven layer (1) is produced which has a higher shrinkage capacity or a higher shrinkage potential in the direction of its surface extension than a second nonwoven layer (2), wherein the first nonwoven layer (1) is produced by means of a spunbond method and/or by means of a meltblown method from multicomponent filaments, in particular from bicomponent filaments,
wherein the second nonwoven layer (2) is produced by means of a spunbond method or by means of a meltblown method from multicomponent filaments - in particular from bicomponent filaments - and/or from monocomponent filaments and is directly flatly combined or brought together with the first nonwoven layer (1), in particular is laid directly on the first nonwoven layer (1),
wherein the unit comprising the at least two or both nonwoven layers (1, 2) arranged one on top of the other is consolidated such that over the surface of the unit consolidation regions (12) and consolidation-free regions (13) are arranged in a distributed manner,
wherein following the consolidation, shrinkage of the first nonwoven layer (1) is activated so that as a result of the shrinkage of the first nonwoven layer (1) consolidation-free regions (13) of the second nonwoven layer (2) are displaced or raised transversely, in particular perpendicularly to the surface extension of the unit,
and wherein a laminate (10) having a thickness D of less than 2 mm is produced.

2. The method according to claim 1, wherein the different shrinkage capacities or the different shrinkage potentials of the two nonwoven layers (1, 2) are adjusted by different raw materials for the continuous filaments of the two nonwoven layers (1, 2) and/or by different process conditions during manufacture of the continuous filaments for the two nonwoven layers (1, 2) and/or by different filament cross-sections of the continuous filaments of the two nonwoven layers (1, 2) and/or by different orientations of the continuous filaments in the two nonwoven layers (1, 2).

3. The method according to one of claims 1 or 2, wherein a first nonwoven layer (1) is used in which the shrinkage capacity (shrinkage potential) in the machine direction (MD) to the shrinkage capacity (shrinkage potential) transverse to the machine direction (CD) is 1:1 to 3:1, preferably 1.1:1 - 1.6:1.

4. The method according to one of claims 1 to 3, wherein the first nonwoven layer (1) is produced from multicomponent filaments - in particular from bicomponent filaments - having a core-sheath configuration.

5. The method according to one of claims 1 to 4, wherein the second nonwoven layer (2) is produced from multicomponent filaments - in particular from bicomponent filaments - having a core-sheath configuration and/or side-to-side configuration.

6. The method according to one of claims 1 to 5, wherein the consolidation of the unit comprising the two nonwoven layers (1, 2) is carried out as thermal consolidation and wherein preferably during this thermal consolidation continuous filaments of the first nonwoven layer (1) are fused with continuous filaments of the second nonwoven layer (2).

7. The method according to one of claims 1 to 6, wherein the consolidation of the unit comprising the at least two nonwoven layers (1, 2) or comprising the two nonwoven layers is carried out with at least one calender (11).

8. The method according to one of claims 1 to 7, wherein the shrinkage of the first nonwoven layer (1) is thermally activated, in particular is thermally activated with the aid of at least one hot fluid and/or by contact with a hot surface.

9. The method according to one of claims 1 to 8, wherein the production of the at least two nonwoven layers (1, 2), the consolidation of the unit comprising the nonwoven layers (1, 2) and the shrinkage of the first nonwoven layer (1) is carried out inline.

10. A laminate comprising at least two nonwoven layers (1, 2) of continuous filaments, in particular of thermoplastic material, arranged one above the other, preferably produced according to a method according to one of claims 1 to 9, wherein a first nonwoven layer (1) is formed as a spunbond layer or as melt-blown layer and comprises multicomponent filaments, in particular bicomponent filaments,
wherein a second nonwoven layer (2) arranged directly on the first nonwoven layer (1) is formed as a spunbond layer or as a melt-blown layer and comprises multicomponent filaments, in particular bicomponent filaments and/or monocomponent filaments,
wherein the first nonwoven layer (1) is configured to be shrunk as a result of thermal shrinkage in the direction of its surface extension and as a result of this shrinkage, regions of the second nonwoven layer (2) are configured to be displaced or raised transversely to, in particular perpendicular to the surface extension of the unit comprising first and second nonwoven layer,
and wherein the thickness D of the laminate (10) is below 2 mm.

11. The laminate according to claim 10, wherein the unit comprising the at least two or both nonwoven layers (1, 2) arranged one on top of the other is consolidated such that over the surface of the unit consolidation regions (12) and consolidation-free regions (13) are arranged in a distributed manner and wherein as a result of the shrinkage of the first nonwoven layer (1), consolidation-free regions of the second nonwoven layer (2) are configured to be displaced or raised transversely, in particular perpendicularly to the surface extension of the unit, in relation to the consolidation regions (12).

12. The laminate according to one of claims 10 or 11, wherein at least one plastic component on the outer surface of the continuous filaments of the first nonwoven layer (1) corresponds to a plastic component on the outer surface of the continuous filaments of the second nonwoven layer (2) and wherein preferably a plastic component on the outer surface of the continuous filaments of the first nonwoven layer (1) and a plastic component on the outer surface of the continuous filaments of the second nonwoven layer (2) is a polyolefin, in particular a polyethylene or a polypropylene.

13. The laminate according to one of claims 10 to 12, wherein the melting point of a plastic component on the outer surface of the continuous filaments of the first nonwoven layer (1) is higher than the temperature (activation temperature) at which shrinkage of the first nonwoven layer (1) can be activated and wherein preferably the continuous filaments of the first nonwoven layer (1) are implemented as multicomponent filaments, in particular as bicomponent filaments having a core-sheath configuration and wherein the melting point of the sheath components of these continuous monofilaments is higher than the temperature at which the shrinkage of the first nonwoven layer (1) can be activated.

14. The laminate according to one of claims 10 to 13, wherein the temperature at which the shrinkage of the first nonwoven layer (1) can be activated or is activated (activation temperature) is at least 5°C, preferably at least 10°C and particularly preferably at least 15°C below the melting point of the lowest-melting plastic component of the laminate (10) or the nonwoven-layer unit exposed to shrink activation.

15. The laminate according to one of claims 10 to 14, wherein the average minimum spacing between the two consolidation regions (12) of the unit is more than 1 mm, preferably more than 2 mm.

16. The laminate according to one of claims 10 to 15, wherein the thickness D of the laminate (10) is less than 1.8 mm and particularly preferably less than 1.5 mm.

17. The laminate according to one of claims 10 to 16, wherein the ratio of the maximum tensile strength of the laminate in the machine direction (MD) to the maximum tensile strength of the laminate crosswise to the machine direction (CD) is 2.5:1 to 1.2:1.

18. The laminate according to one of claims 10 to 17, wherein the laminate (10) has at least three layers or nonwoven layers wherein a first nonwoven layer has a higher shrinkage capacity or a higher shrinkage potential in the direction of its surface extension than a second and a third nonwoven layer and/or wherein a first nonwoven layer has a lower shrinkage capacity or a lower shrinkage potential in the direction of its surface extension than a second and a third nonwoven layer.

19. The laminate according to one of claims 10 to 18, wherein the laminate (10) has at least three layers or nonwoven layers, wherein two outer shrinking or more strongly shrinking layers or nonwoven layers are provided as well as an average non-shrinking or less shrinking layer or nonwoven layer.

20. The laminate according to one of claims 10 to 18, wherein the laminate (10) has at least three layers or nonwoven layers, wherein two outer non-shrinking or less shrinking layers or nonwoven layers are provided as well as a middle shrinking or more strongly shrinking nonwoven layer.

## Revendications

1. Procédé, destiné à fabriquer un laminé (10) avec au moins deux couches de non-tissé (1,2) superposées en filaments continus, notamment en filaments continus en matière thermoplastique,
lors duquel, on créé une première couche de non-tissé (1), qui fait preuve d'une rétractabilité plus élevée ou d'un potentiel de rétraction plus élevé dans la direction de son extension superficielle qu'une deuxième couche de non-tissé (2), la première couche de non-tissé (1) étant créée à l'aide d'un procédé de liage par filage et/ou à l'aide d'un procédé de fusion-soufflage à partir de filaments multicomposants, notamment de filaments bicomposants, la deuxième couche de non-tissé (2) étant créée à l'aide d'un procédé de liage par filage et/ou à l'aide d'un procédé de fusion-soufflage à partir de filaments multicomposants, (notamment de filaments bicomposants), et/ou à partir de filaments monocomposant et étant directement associée en nappe, respectivement rassemblée avec la première couche de non-tissé (1), notamment déposée directement sur la première couche de non-tissé (1),
l'ensemble des au moins deux ou des deux couches de non-tissé (1,2) étant solidifié avec le critère que sur la surface de l'ensemble, des zones solidifiées (12) et des zones non solidifiées (13) soient placées en étant distribuées,
lors duquel, à la suite de la solidification, on active la rétraction de la première couche de non-tissé (1), de sorte qu'en tant que conséquence de la rétraction de la première couche de non-tissé (1), des zones non solidifiées (13) de la deuxième couche de non-tissé (2) se déplacent ou se relèvent à la transversale, notamment à la perpendiculaire de l'extension superficielle de l'ensemble et lors duquel, on créé un laminé (10) d'une épaisseur D inférieure à 2 mm.

2. Procédé selon la revendication 1, les différentes rétractabilités ou les différents potentiels de rétraction de deux couches de non-tissé (1,2) étant réglées par différentes matières premières pour les filaments continus des deux couches de non-tissé (1,2) et/ou par différentes conditions de processus lors de la création des filaments continus pour les deux couches de non-tissé (1,2) et/ou par différentes sections transversales des filaments continus des deux couches de non-tissé (1,2) et/ou par différentes orientations des filaments continus dans les deux couches de non-tissé (1,2).

3. Procédé selon l'une quelconque des revendications 1 ou 2, une première couche de non-tissé (1) étant utilisée pour laquelle le rapport de la rétractabilité (potentiel de rétraction) dans la direction de la machine (MD) à la rétractabilité (potentiel de rétraction) à la transversale de la direction de la machine (CD) est de 1 : 1 à 3 : 1, de préférence de 1,1 : 1 à 1,6 : 1.

4. Procédé selon l'une quelconque des revendications 1 à 3, la première couche de non-tissé (1) étant créée à partir de filaments multicomposants (notamment de filaments bicomposants), avec une configuration âme/enveloppe.

5. Procédé selon l'une quelconque des revendications 1 à 4, la deuxième couche de non-tissé (2) étant créée à partir de filaments multicomposants (notamment de filaments bicomposants), avec une configuration âme/enveloppe et/ou une configuration côte à côte.

6. Procédé selon l'une quelconque des revendications 1 à 5, la solidification de l'ensemble des deux couches de non-tissé (1,2) étant réalisée sous la forme d'une solidification thermique et de préférence lors de cette solidification thermique, des filaments continus de la première couche de non-tissé (1) étant fusionnés avec des filaments continus de la deuxième couche de non-tissé (2).

7. Procédé selon l'une quelconque des revendications 1 à 6, la solidification de l'ensemble des au moins deux couches de non-tissé (1,2), respectivement des deux couches de non-tissé étant réalisée à l'aide d'au moins une calandre (11).

8. Procédé selon l'une quelconque des revendications 1 à 7, la rétraction de la première couche de non-tissé (1) étant thermiquement activée, notamment à l'aide d'au moins un fluide chaud et/ou étant thermiquement activée par contact avec une surface chaude.

9. Procédé selon l'une quelconque des revendications 1 à 8, la création des au moins deux couches de non-tissé (1,2), la solidification de l'ensemble des couches de non-tissé (1,2) et la rétraction de la première couche de non-tissé (1) étant réalisées en ligne.

10. Laminé, pourvu d'au moins deux couches de non-tissé (1,2) superposées en filaments continus, notamment en matière thermoplastique (fabriqué de préférence d'après un procédé selon l'une quelconque des revendications 1 à 9), une première couche de non-tissé (1) étant conçue sous la forme d'une couche filée-liée ou d'une couche soufflée en fusion et comportant des filaments multicomposants, notamment des filaments bicomposants, une deuxième couche de non-tissé (2) placée directement sur la première couche de non-tissé (1) étant conçue sous la forme d'une couche filée-liée ou d'une couche soufflée en fusion et comportant des filaments multicomposants (notamment des filaments bicomposants) et/ou des filaments monocomposant,
du fait d'une rétraction thermique dans la direction de son extension superficielle, la première couche de non-tissé (1) étant conçue en étant rétractée et en conséquence de ladite rétraction, des zones de la deuxième couche de non-tissé (2) étant conçues en étant déplacées ou relevées à la transversale, notamment à la perpendiculaire de l'extension superficielle de l'ensemble composé de la première et de la deuxième couche de non-tissé et l'épaisseur D du laminé (10) étant inférieure à 2 mm.

11. Laminé selon la revendication 10, l'ensemble des au moins deux ou des deux couches de non-tissé (1,2) superposées étant solidifié avec le critère que sur la surface de l'ensemble, des zones solidifiées (12) et des zones non solidifiées (13) soient placées en étant distribuées et en conséquence de la rétraction de la première couche de non-tissé (1), des zones non solidifiées de la deuxième couche de non-tissé (2) étant conçues en étant déplacées ou relevées à la transversale, notamment à la perpendiculaire de l'extension superficielle de l'ensemble, en rapport aux zones solidifiées (12).

12. Laminé selon l'une quelconque des revendications 10 ou 11, au moins un composant de la matière plastique sur la surface extérieure des filaments continus de la première couche de non-tissé (1) correspondant à un composant de la matière plastique sur la surface extérieure des filaments continus de la deuxième couche de non-tissé (2) et de préférence un composant de la matière plastique sur la surface extérieure des filaments continus de la première couche de non-tissé (1) et un composant de la matière plastique sur la surface extérieure des filaments continus de la deuxième couche de non-tissé (2) étant une polyoléfine, notamment un polyéthylène ou un polypropylène.

13. Laminé selon l'une quelconque des revendications 10 à 12, le point de fusion d'un composant de la matière plastique sur la surface extérieure des filaments continus de la première couche de non-tissé (1) étant supérieur à la température (température d'activation) à laquelle la rétraction de la première couche de non-tissé (1) est activable et de préférence, les filaments continus de la première couche de non-tissé (1) étant réalisés sous la forme de filaments multicomposants, notamment de filaments bicomposants avec une configuration âme/enveloppe et la température de fusion du composant de l'enveloppe desdits filaments continus étant supérieure à la température à laquelle la rétraction de la première couche de non-tissé (1) est activable.

14. Laminé selon l'une quelconque des revendications 10 à 13, la température à laquelle la rétraction de la première couche de non-tissé (1) est activable, respectivement est activée (température d'activation) étant inférieure d'au moins 5°C, de préférence, d'au moins 10°C et de manière préférentielle, d'au moins 15°C à la température de fusion du composant à plus bas point de fusion de la matière plastique du laminé (10) ou de l'ensemble des couches de non-tissé exposé à l'activation de la rétraction.

15. Laminé selon l'une quelconque des revendications 10 à 14, l'écart minimal moyen entre deux zones solidifiées (12) de l'ensemble étant supérieur à 1 mm, de préférence supérieur à 2 mm.

16. Laminé selon l'une quelconque des revendications 10 à 15, l'épaisseur D du laminé (10) étant inférieure à 1,8 mm et de manière particulièrement préférentielle, inférieure à 1,5 mm.

17. Laminé selon l'une quelconque des revendications 10 à 16, le rapport de la force de traction maximale du laminé dans la direction de la machine (MD) à la force de traction maximale du laminé à la transversale de la direction de la machine (CD) étant de 2,5 : 1 à 1,2 : 1.

18. Laminé selon l'une quelconque des revendications 10 à 17, le laminé (10) comportant au moins trois couches, respectivement couches de non-tissé, une première couche de non-tissé faisant preuve d'une rétractabilité plus élevée ou d'un potentiel de rétraction plus élevé dans la direction de son extension superficielle qu'une deuxième et une troisième couches de non-tissé et/ou une première couche de non-tissé faisant preuve d'une rétractabilité moins élevée ou d'un potentiel de rétraction moins élevé dans la direction de son extension superficielle qu'une deuxième et une troisième couches de non-tissé.

19. Laminé selon l'une quelconque des revendications 10 à 18, le laminé (10) comportant au moins trois couches, respectivement couches de non-tissé, deux couches, respectivement couches de non-tissé extérieures rétractables ou plus fortement rétractables, ainsi qu'une couche, respectivement couche de non-tissé centrale non rétractable ou moins rétractable étant prévues.

20. Laminé selon l'une quelconque des revendications 10 à 18, le laminé (10) comportant au moins trois couches, respectivement couches de non-tissé, deux couches, respectivement couches de non-tissé extérieures non rétractables ou moins rétractables, ainsi qu'une couche, respectivement couche de non-tissé centrale rétractable ou plus fortement rétractable étant prévues.
